# EUROPEAN PATENT APPLICATION

(11) **EP 1 069 037 A2**
(43) Date of publication of application: **17.01.2001**
(21) Application number: 00114197.7
(22) Date of filing: 14.07.2000
(51) Int. Cl.: B62K 19/36

(54) **Bicycle with adjustable seat**

(30) Priority: 16.07.1999 IT VI990058 U
(71) Applicant: Gelai, Luciano, 36073 Cornedo Vicentino (VI) (IT)
(72) Inventor: Gelai, Luciano, 36073 Cornedo Vicentino (VI) (IT)
(74) Representative: Bonini, Ercole

(57) **Abstract**

The finding produces a bicycle (1) comprising a frame (2) provided with a seat (3) and standing on the ground by a rear traction wheel (4) mechanically connected by first kinematic motions (5) to a pair of pedals (6a, 6b) driven by the cyclist and supported by said frame (2), and a front wheel (7) in line with the rear wheel and fixed to a fork (8) connected to handlebars (9) steered by the cyclist. The seat (3) is held by a post (10) telescopically sliding inside a tube (11) that has a pivoting joint (12) to the frame (2) around which it can rotate to vary the distance of the seat (3) from the handlebars (9). There are means of locking (13) the tube (11) when adjusted.

## Description

The finding concerns a bicycle provided with an adjustable seat to be adapted to suit persons of different build.

It is common knowledge that a bicycle basically consists of a frame, provided with a seat where the cyclist sits, which stands on the ground by a pair of wheels preferably tyred, where the rear one provides the traction and the front one can be steered by handlebars.

The cyclist uses the physical force of his/her legs to drive a pair of pedals connected to the frame and mechanically connected by kinematic motions to the rear traction wheel, while his/her hands grip the handlebars connected to the fork that holds the front wheel.

Bicycles are normally provided with a seat that is adjustable in height to adapt the distance from the pedals to suit persons of different stature.

According to known techniques, this adjustment is achieved by providing the bicycle with a seat held by a post telescopically coupled inside a tube belonging to the frame.

By making the post slide upwards or downwards, the cyclist obtains the desired adjustment, which he/she then sets in place by suitable means of locking that fix the post inside the tube.

Bicycles fitted with this type of seat have some known inconveniences.

A first inconvenience is that it is not always possible to obtain the right relationship between the distance from seat to pedals and distance from seat to handlebars.

In fact, even though the tube that holds the seat post is at a slight angle, when the seat is raised it is also moved away from the handlebars, but these two movements do not work independently from one another.

Therefore it may be found that, for instance, persons of below average build, having lowered the seat, still find the handlebars too far away and on the other side, it may also be found that persons of above average build, having raised the seat, find that the handlebars are still too close.

Another inconvenience is that if both conditions and in other words the seat's height from ground and the distance from the handlebars are not suited to the cyclist, he/she pedals in an ergonomically incorrect position that in addition to reducing pedalling performance, also reduces control over the bicycle and makes riding less safe.

This finding has set the scope of eliminating all the aforesaid inconveniences.

A first scope of the finding is to produce a bicycle fitted with a seat whose position can be adjusted independently both in its height from the ground and in its distance from the handlebars.

Another scope is to produce a bicycle that offers the cyclist an ergonomically correct position, regardless of the cyclist's physical characteristics.

Said scopes are achieved by producing a bicycle that in accordance with the main claim comprises a frame provided with seat and standing on the ground by a rear traction wheel mechanically connected by first kinematic motions to a pair of pedals driven by the cyclist and supported by said frame and a front wheel in line with the rear wheel and attached to a fork connected to handlebars steered by said cyclist, said seat being supported by a post telescopically sliding inside a tube, and being characterised in that said tube has a pivoting joint to the frame, around which it can rotate to vary the distance of said seat from said handlebars, means of locking being provided suited to stopping the rotation of said tube when adjusted.

So an advantage in the bicycle under this finding is that it is possible to adjust the seat to adapt the riding position to suit persons having different stature and different physical builds.

Another advantage is that the seat adjustment allows the cyclist to acquire an ergonomic riding position that improves riding comfort.

Said scopes and advantages will be better explained during the description of a preferred form of execution of the finding, which is given as a guideline but not a limitation and refers to the attached diagrams, where:
- figure 1 shows a side view of the bicycle finding
- figure 2 shows an enlarged illustration of a detail of the bicycle in figure 1 with a particularly good view of the seat
- figure 3 shows a rear view of the enlarged detail in figure 2,
- figure 4 shows the bicycle in figure 1 in a different layout
- figure 5 shows the bicycle in figure 1 in another layout
- figure 6 shows the bicycle in figure 1 in an additional layout.

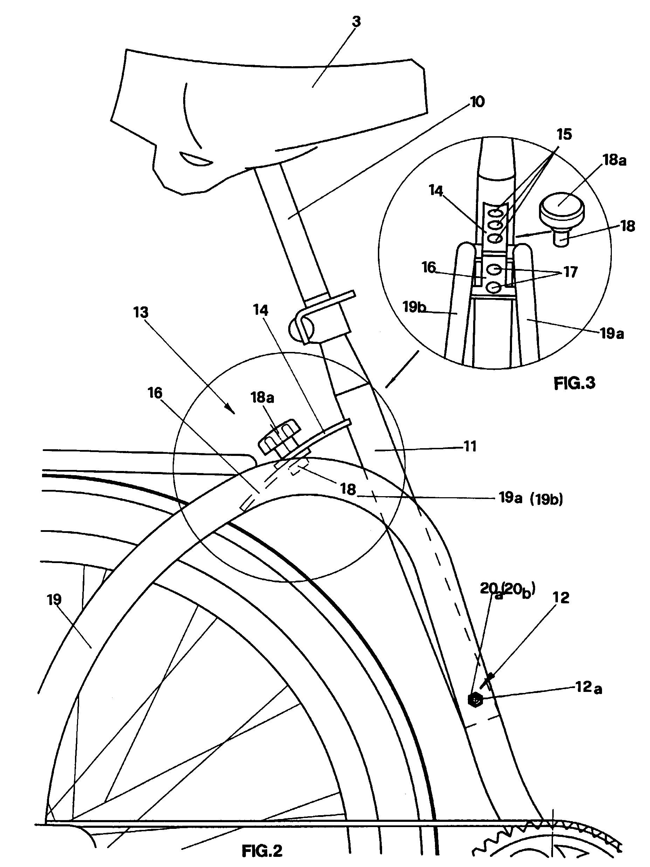

As can be seen in figure 1, the bicycle finding, generally indicated by **1**, comprises a frame **2** provided with a seat **3**, which stands on the ground by a rear traction wheel **4**, mechanically connected by first kinematic motions **5** to a pair of pedals **6a, 6b** supported by the frame **2** and driven by the cyclist, and a front wheel **7**, in line with the rear wheel **4**, attached to a front fork **8** connected to handlebars **9** steered by the cyclist.

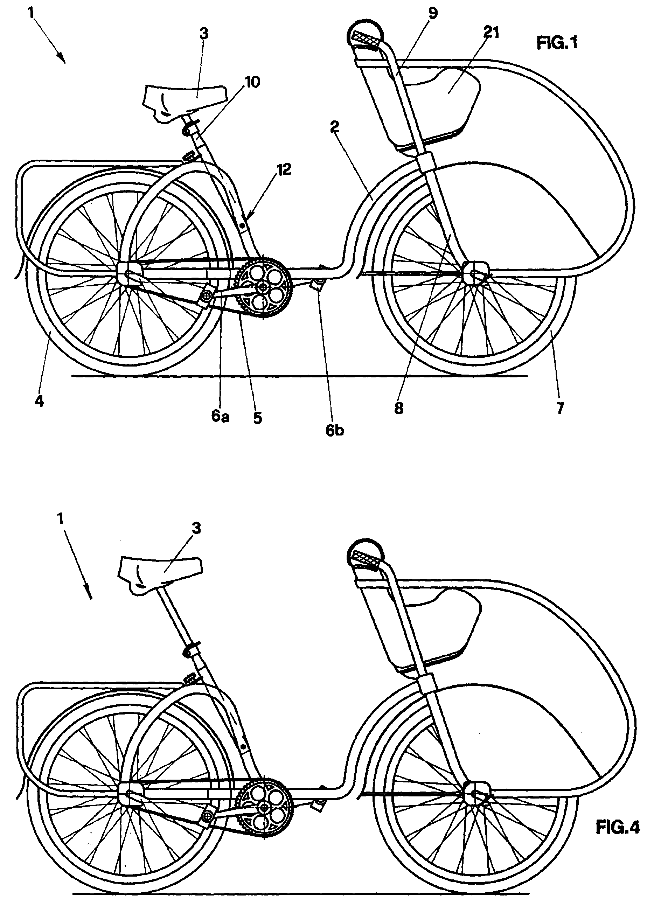

The seat **3**, as can be seen in detail in figure 2, is supported by a post **10** telescopically coupled inside a tube **11**.

Under this finding, the tube **11** has a pivoting joint **12** to the frame **2**, around which it can rotate to vary the distance of said seat **3** from said handlebars **9**, means of locking **13** being provided suited to stopping the rotation of said tube **11** when adjusted.

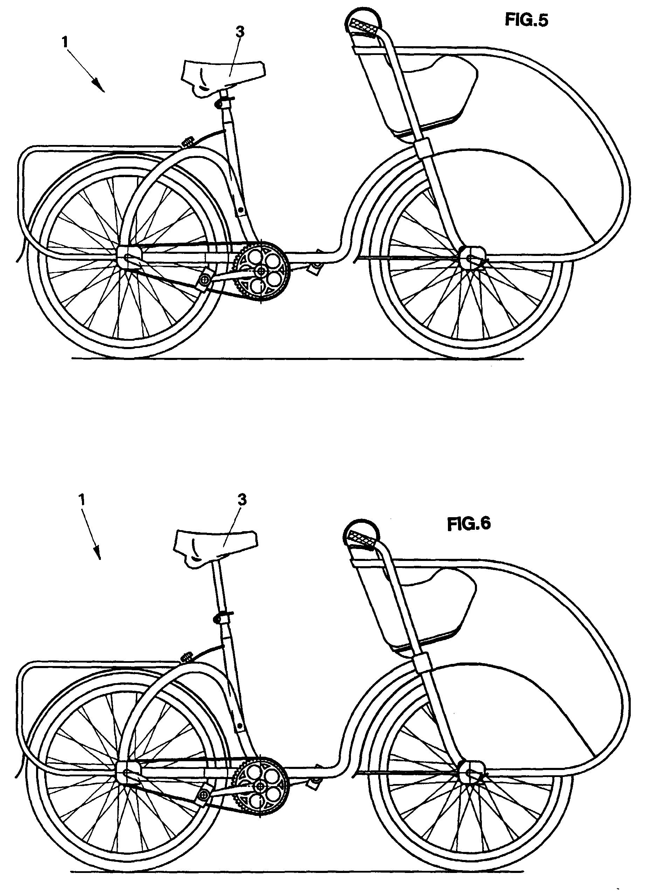

According to the preferred form of execution, highlighted in figures **2** and **3**, said means of locking **13** comprise:
- a first plate **14** with one end attached to the tube **11** and provided with a series of open holes **15**;
- a second plate **16** fixed to the frame **2** and provided with a series of threaded holes **17**;
- means of fixing set inside the holes **15, 17** suited to tighten the plates **14**, **16** one against the other to lock the rotation of the tube **11** around the pivoting joint **12**.

As can be seen, the means of fixing is preferably a screw **18** with a hand knob **18a**, which is slid into one of the open holes **15** and screwed into one of the threaded holes **17**.

Again according to the aforementioned preferred form of execution, the pivoting joint **12** is made at the junction between the two rear stays **19a, 19b**, which together produce the rear fork **19** that supports the rear wheel **4** and consists of a pin **12a** that passes crossways through the tube **11** and the stays **19a,19b**.

The pin **12a** is free to rotate within its respective holes in the stays **19a, 19b** and the tube **11** and has threaded ends, suited to receiving lock nuts **20a, 20b**, which prevent it from sliding out while still allowing the tube **11** to rotate.

However it is clear that the means that allow the tube to be locked to the frame as with the means of locking the tube's rotation, can differ from those illustrated and described in type, shape and construction materials.

In conclusion, the pivoting joint can also be located in a different place on the frame.

Figures 4 to 6 illustrate the same bicycle as figure 1 in different layouts that it may assume depending on how the seat **3** is adjusted.

The diagrams refer to a bicycle that is also fitted with an anatomic seat **21** for transporting a child, where the seat's adjustment in height from the ground and in distance from the handlebars is especially useful.

In particular, figure 1 illustrates a layout of the bicycle **1** with the seat **3** fully lowered and completely withdrawn from the handlebars **9**, suitable for persons with short legs but rather a long trunk and arms.

Figure 4 on the other hand illustrates a layout of the bicycle **1** with the seat **3** fully raised and completely withdrawn from the handlebars **9**, suitable for tall persons.

Figure 5 illustrates a layout of the bicycle **1** with the seat **3** fully lowered and completely advanced towards the handlebars **9**, suitable for short persons.

Finally, figure 6 illustrates a layout of the bicycle **1** with the seat **3** fully raised and as forward as possible completely advanced towards the handlebars **9**, suitable for persons with long legs but with rather short trunk and arms.

On the basis of the above descriptions and illustrations, it is clear that the bicycle finding achieves all the set scopes.

It shall be understood that any further variants in execution not illustrated nor described that may be made to the finding, since they are based on the same idea as the claim, shall be covered by this patent.

## Claims

1. Bicycle (1) comprising a frame (2) provided with a seat (3) and standing on the ground by a rear traction wheel (4) mechanically connected by first kinematic motions (5) to a pair of pedals (6a, 6b) driven by the cyclist and supported by said frame (2), and a front wheel (7) in line with the rear wheel and fixed to a fork (8) connected to handlebars (9) steered by said cyclist, said seat (3) being held by a post (10) telescopically sliding inside a tube (11), **characterised in that** said tube (11) has at least one pivoting joint (12) to said frame, (2) around which is can rotate to vary the distance of said seat (3) from said handlebars (9), means of locking (13) being provided suited to stopping the rotation of said tube (11) when adjusted.

2. Bicycle (1) according to claim 1) **characterised in that** said means of locking (13) comprise:
- a first plate (14) with one end attached to said tube (11) and provided with a series of open holes (15);
- a second plate (16) fixed to said frame (2) and provided with a series of threaded holes (17);
- means of fixing set inside said holes (15, 17) suited to tightening said plates (14, 16) against each other.

3. Bicycle (1) according to claim 2) **characterised in that** said means of fixing consists of a screw (18) with hand knob (18a), which is slid into one of said open holes (15) and is screwed into a corresponding threaded hole (17).

4. Bicycle (1) according to claim 1) **characterised in that** said pivoting joint (12) is made at the junction between two stays (19a, 19b) of the frame (2) that together produce the rear fork (19) that supports the rear wheel (4).

5. Bicycle (1) according to claim 3) **characterised in that** said pivoting joint (12) consists of a pin (12a) passing crossways through said tube (11) and said stays (19a, 19b), said pin (12a) being free to rotate in its respective holes in said stays (19a, 19b) and in said tube (11), and being provided with threaded ends each of which receives a lock nut (20a, 20b), suited to preventing said pin (12a) from sliding out.
